# EUROPEAN PATENT APPLICATION

(11) **EP 2 879 239 A1**
(43) Date of publication of application: **03.06.2015**
(21) Application number: 13823315.0
(22) Date of filing: 25.07.2013
(51) Int. Cl.: H01R 4/70, H01R 4/62, H01R 13/03

(54) **WIRE WITH TERMINAL AND WIRE HARNESS USING SAME**

(30) Priority: 25.07.2012 JP 2012165218; 25.07.2012 JP 2012165221; 25.07.2012 JP 2012165238
(71) Applicant: Yazaki Corporation, Tokyo 108-0073 (JP)
(72) Inventor: OSADA, Kenji, Susono-shi Shizuoka 410-1107 (JP); KAYAMA, Shinobu, Susono-shi Shizuoka 410-1107 (JP); KANDA, Masahiro, Susono-shi Shizuoka 410-1107 (JP)
(74) Representative: Hoffmann Eitle
(86) International application number: PCT/JP2013/070244
(87) International publication number: WO 2014/017614

(57) **Abstract**

A terminal-equipped electric wire (1) of the present invention includes an anticorrosion member (30) integrally formed around a connection between a conductor (11) of an electric wire (10) and a crimp terminal (20) and around a wire coating material (12). The anticorrosion member contains thermoplastic polyamide resin as the main component. Moreover, the peel strength between the anticorrosion member and a terminal material of the crimp terminal is not lower than 0.1 N/mm and not higher than 0. 74 N/mm, and the peel strength between the anticorrosion member and the wire coating material is not lower than 0.5 N/mm. The brittleness temperature of the anticorrosion member is not higher than 0°C, and the melt flow rate thereof is not lower than 26 g/10 min.

## Description

### Technical Field

The present invention relates to a terminal-equipped electric wire and a wire harness using the same. More specifically, the present invention relates to a terminal-equipped electric wire which includes an anticorrosion member around a connection between a conductor within an electric wire and a crimp terminal, and relates to a wire harness using the same.

### Background Art

From the viewpoint of weight reduction of vehicles for increasing gas mileage, more coated electric wires constituting wire harnesses are made of aluminum in recent years. Terminal fittings connected to the thus-configured coated electric wires are generally made of copper or copper alloy excellent in electrical properties. However, when the conductor within a coated electric wire and the terminal fitting are made of different materials, the contact portion between the conductor and the terminal fitting is subject to corrosion, thus requiring an anticorrosion member capable of preventing corrosion of the contact portion.

With regard to conventional electric wires, a crimping connection structure is disclosed, in which the entire connection between a terminal fitting and a core of a battery cable is sealed with thermoplastic polymer to form a hot melt molding portion (see Patent Literature 1, for example). The thermoplastic polymer used herein is a hot-melt material such as thermoplastic polyamides and polypropylenes and moisture-curing urethanes. Moreover, the hot-melt molding portion is molded by inserting the connection into a cavity of a mold for injection molding and injecting the thermoplastic polymer into the mold.

Besides the hot-melt molding, a method to produce a molded product is proposed which causes an urethane foam material to foam within a mold (see Patent Literature 2, for example). Moreover, a wire harness terminal structure is proposed which fully covers with mold resin, an exposed part of the connection between the terminal fitting and the coated electric wire and the entire circumference of the region near the exposed part (see Patent Literature 3, for example).

### Citation List

### Patent Literature

Patent Literature 1: Japanese Patent Unexamined Publication No. 2006-286385
Patent Literature 2: Japanese Patent Unexamined Publication No. 2007-052999
Patent Literature 3: Japanese Patent Unexamined Publication No. 2011-222243

### Summary of Invention

However, if the adhesion strength between the anticorrosion member and the terminal fitting is increased, the adhesion strength between the anticorrosion member and the mold is increased, and some kind of mold releasing process is necessary to facilitate mold release. To be specific, it is necessary to apply a mold release agent to the mold before injection molding or to perform surface treatment with silicone, fluorine, or the like for the surface of the mold. In the case where anticorrosion member has high adhesion, it is difficult for the anticorrosion member to release from the mold even if the aforementioned mold releasing process is performed, thus reducing the productivity. Moreover, the mold releasing process normally has low durability, causing a quality failure after molding.

The present invention was made in the light of the problems involved in the conventional techniques. An object of the present invention is to provide a terminal-equipped electric wire in which the connection between an electric wire and a crimp terminal is prevented from corroding over a long period of time and which can easily release from a mold and can be thereby produced with high productivity and to provide a wire harness including the terminal-equipped electric wire.

A terminal-equipped electric wire according to a first aspect of the present invention includes: an electric wire including a conductor and a wire coating material covering the conductor; a crimp terminal connected to the conductor of the electric wire; and an anticorrosion member which is integrally formed around a connection between the conductor and the crimp terminal and around the wire coating material adjacent to the connection. The anticorrosion member contains thermoplastic polyamide resin as a main component. The peel strength between the anticorrosion member and a terminal material of the crimp terminal is not lower than 0.1 N/mm and not higher than 0.74 N/mm, and the peel strength between the anticorrosion member and the wire coating material is not lower than 0.5 N/mm. The anticorrosion member has a brittleness temperature of not higher than 0°C, and has a melt flow rate of not lower than 26 g/10 min.

A terminal-equipped electric wire according to a second aspect of the present invention is characterized in that the peel strength between the anticorrosion member and the terminal material of the crimp terminal is not lower than 0.15 N/mm and not higher than 0.74 N/m in the terminal-equipped electric wire according to the first aspect.

A terminal-equipped electric wire according to a third aspect of the present invention is characterized in that the anticorrosion member has a width smaller than opening width of a cavity of a connector to which the crimp terminal and the anticorrosion member are inserted in the terminal-equipped electric wire according to the first or second aspect.

A terminal-equipped electric wire according to a fourth aspect of the present invention is characterized in that the width (W1) of the anticorrosion member and the opening width (W2) of the cavity satisfy a relation of W1 ≤ W2-0.05 mm in the terminal-equipped electric wire according to the third aspect.

A terminal-equipped electric wire according to a fifth aspect of the present invention is characterized in that the conductor is made of aluminum or aluminum alloy in the terminal-equipped electric wire according to any one of the first to fourth aspect. The terminal material of the crimp terminal is made of at least one selected from the group consisting of copper, copper alloy, stainless steel, tin-plated copper, tin-plated copper alloy, tin-plated stainless steel, gold-plated copper, gold-plated copper alloy, gold-plated stainless steel, silver-plated copper, silver-plated copper alloy, and silver-plated stainless steel. Moreover, the wire coating material is made of at least one selected from the group consisting of polyethylene, polypropylene, ethylene copolymer, propylene copolymer, and polyvinyl chloride.

A wire harness according to a sixth aspect of the present invention includes the terminal-equipped electric wire according to any one of the first to fifth aspects.

A wire harness according to a seventh aspect of the present invention includes: a terminal-equipped electric wire according to the first or second aspect; and a connector including a plurality of cavities into which a crimp terminal and an anticorrosion member of the terminal-equipped electric wire are inserted. The anticorrosion member has a width smaller than opening width of each cavity of the connector.

A method of manufacturing a terminal-equipped electric wire according to an eighth aspect of the present invention includes the steps of: connecting an electric wire including a conductor and a wire coating material covering the conductor with a crimp terminal connected to the conductor of the electric wire; and forming an anticorrosion member by injection molding around a connection between the conductor and the crimp terminal and around the wire coating material adjacent to the connection. The anticorrosion member contains thermoplastic polyamide resin as a main component. Moreover, the peel strength between the anticorrosion member and a terminal material of the crimp terminal is not lower than 0.1 N/mm and not higher than 0.74 N/m, and the peel strength between the anticorrosion member and the wire coating material is not lower than 0.5 N/mm. The anticorrosion member has a brittleness temperature of not higher than 0°C, and has a melt flow rate of not lower than 26 g/10 min.

The method of manufacturing a terminal-equipped electric wire according to a ninth aspect is characterized in that the peel strength between the anticorrosion member and the terminal material of the crimp terminal is not lower than 0.15 N/mm and not higher than 0.74 N/m in the method of manufacturing a terminal-equipped electric wire according to the eighth aspect.

### Brief Description of Drawings

Fig.1 illustrates a terminal-equipped electric wire according to embodiments of the present invention, Fig. 1(a) being a perspective view illustrating the terminal-equipped electric wire, Fig. 1(b) being a side view illustrating a part of the terminal-equipped electric wire.
Fig. 2 is a cross-sectional view taken along a line A-A of Fig. 1(b).
Fig. 3 is a schematic view illustrating a state of the terminal-equipped electric wire according to the embodiments of the present invention before an electric wire is connected to a crimp terminal.
Fig. 4 is a schematic view illustrating the terminal-equipped electric wire according to the embodiments of the present invention when the electric wire is connected to the crimp terminal.
Fig. 5 is a perspective view illustrating a wire harness according to embodiments of the present invention.

### Description of Embodiments

Hereinafter, a description is given of a terminal-equipped electric wire and a wire harness according to first to third embodiments of the present invention in detail with reference to the drawings. The dimensional proportions in the drawings are exaggerated for convenience of description and are sometimes different from real ones.

### [FIRST EMBODIMENT]

### <Terminal-equipped electric wire>

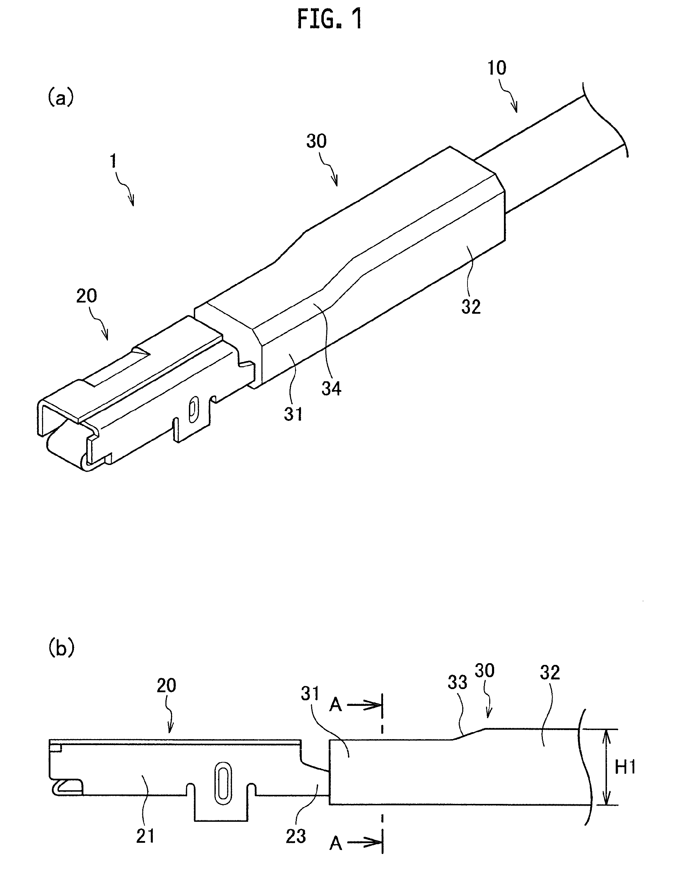

As illustrated in Figs. 1 to 4, a terminal-equipped electric wire 1 of the first embodiment includes: an electric wire 10 including an electrically-conducting conductor 11 and a wire coating material 12 coating the conductor 11; and a crimp terminal 20 connected to the conductor 11 of the electric wire 10. The terminal-equipped electric wire 1 further includes an anticorrosion member 30 integrally molded around the connection between the conductor 11 and the crimp terminal 20 and around a part of the wire coating material 12 adjacent to the same connection.

The crimp terminal 20 of the terminal-equipped electric wire 1 is female type and includes in the front side, an electric connection portion 21, which is configured to be connected to a not-shown opposite terminal. The electric connection portion 21 includes a spring piece engaged with the opposite terminal and has a box shape. Moreover, the crimp terminal 20 includes in the rear side, a wire connecting portion 22 which is connected to an end of the electric wire 10 by swaging. Between the electric connection portion 21 and the wire connecting portion 22, a bridge portion 23 is provided.

The wire connecting portion 22 includes a conductor crimp portion 24 located in the front side and a coating material swaging portion 25 located at the back of the conductor crimp portion 24.

The conductor crimp portion 24 is in direct contact with a part of the conductor 11 exposed by partially removing the wire coating material 12 at the end of the electric wire 10 and includes a bottom plate 26 and a pair of conductor swaging pieces 27. The pair of conductor swaging pieces 27 extend upward from both side edges of the bottom plate 26 and are bent inward to wrap the conductor 11 of the electric wire 10 for swaging so that the conductor 11 comes into close contact with the upper surface of the bottom plate 26. By the bottom plate 26 and pair of conductor swaging pieces 27, the conductor crimp portion 24 is formed to have a substantially U-shape cross-section.

Moreover, the coating material swaging portion 25 in the back side is in direct contact with the wire coating material 12 at the end of the electric wire 10 and includes a bottom plate 28 and a pair of coating material swaging pieces 29. The pair of coating material swaging pieces 29 extend upward from both side edges of the bottom plate 28 and are bent inward to wrap the portion covered with the wire coating material 12 for swaging so that the wire coating material 12 comes into close contact with the upper surface of the bottom plate 28. By the bottom plate 26 and pair of coating material swaging pieces 29, the coating material swaging portion 25 is formed so as to have a substantially U-shape cross-section. Herein, the bottom plate 26 of the conductor crimp portion 24 and the bottom plate 28 of the coating material swaging portion 25 are continuously formed as a common bottom plate.

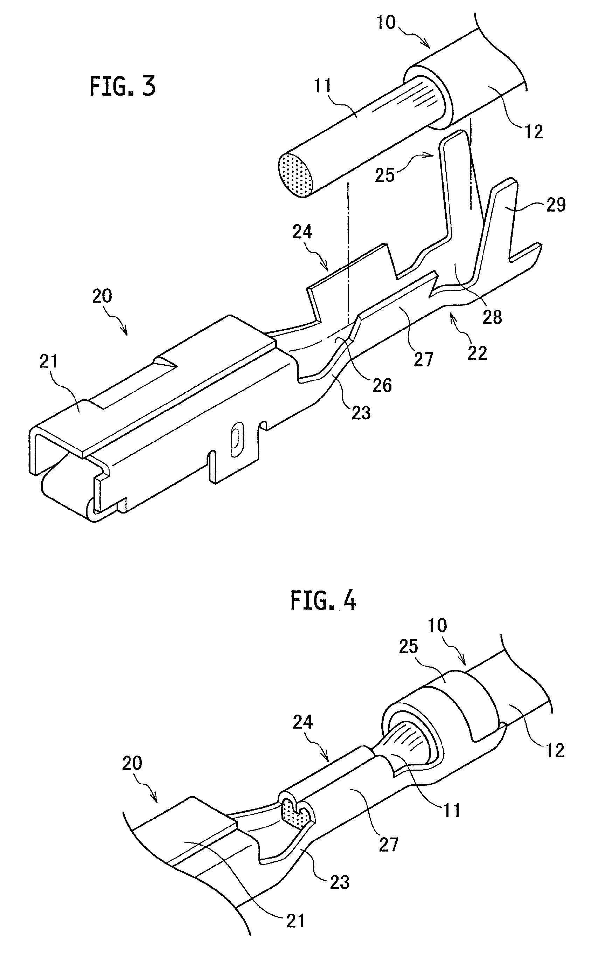

In the first embodiment, as illustrated in Figs. 3 and 4, the end of the electric wire 10 is inserted into the wire connecting portion 22 of the crimp terminal 20 having the aforementioned configuration. The conductor 11 of the electric wire 10 is thus placed on the upper surface of the bottom plate 26 of the conductor crimp portion 24, and a part of the electric wire 10 covered with the wire coating material 12 is placed on the upper surface of the bottom plate 28 of the coating material swaging portion 25. By pressing the wire connecting portion 22 and the end of the electric wire 10, the conductor crimp portion 24 and the coating material swaging portion 25 are deformed. To be specific, the pair of conductor swaging pieces 27 of the conductor crimp portion 24 are bent inward to wrap the conductor 11 for swaging so that the conductor 11 comes close contact with the upper surface of the bottom plate 26. Moreover, the pair of coating material swaging pieces 29 of the coating material swaging portion 25 are bent inward to wrap a part of the electric wire 10 covered with the wire coating material 12 for swaging so that the wire coating material 12 comes into close contact with the upper surface of the bottom plate 28. The crimp terminal 20 and the electric wire 10 are crimped to be connected.

As illustrated in Fig.1, in the first embodiment, the bridge portion 23, the wire connecting portion 22, and the portions of the conductor 11 and the wire coating material 12 which are covered with the wire connecting portion 22 are coated with the anticorrosion member 30. In other words, the anticorrosion member 30 covers a part of the bridge portion 23 across the boundary between the conductor crimp portion 24 and the conductor 11 within the electric wire 10 and also covers a part of the wire coating material 12 across the boundary between the coating material swaging portion 25 and the wire coating material 12. A material capable of adhering to both the crimp terminal 20 and the wire coating material 12 is integrally molded on the terminal connecting portion of the electric wire 10 to form the anticorrosion member 30. In this manner, the circumference of the portions of the conductor 11 and the wire coating material 12 which are covered with the wire connecting portion 22 is completely coated with the anticorrosion member 30, thus ensuring the anticorrosion performance at the contact portion between the conductor 11 and the wire connecting portion 22.

As illustrated in Fig.1, the anticorrosion member 30 includes: a substantially cuboid-shaped first anticorrosion portion 31, which covers the circumference of the bridge portion 23 and the conductor crimp portion 24; and a substantially cuboid-shaped second corrosion portion 32, which covers the circumference of the coating material swaging portion 25. At each of the corners of the first and second anticorrosion portions 31 and 32, a chamfer portion 34 is formed so as to facilitate insertion of the anticorrosion member 30 into a cavity of a later-described connector.

As illustrated in Fig. 1(b), the lower surface of the first anticorrosion portion 31 is flush with the lower surface of the second anticorrosion portion 32. However, the upper surface of the second anticorrosion portion 32 is located higher than the upper surface of the first anticorrosion portion 31 so as to cover a part of the electric wire 10 and the entire coating material swaging pieces 29. Between the upper surfaces of the first and second anticorrosion portions 31 and 32, a slope 33 is provided.

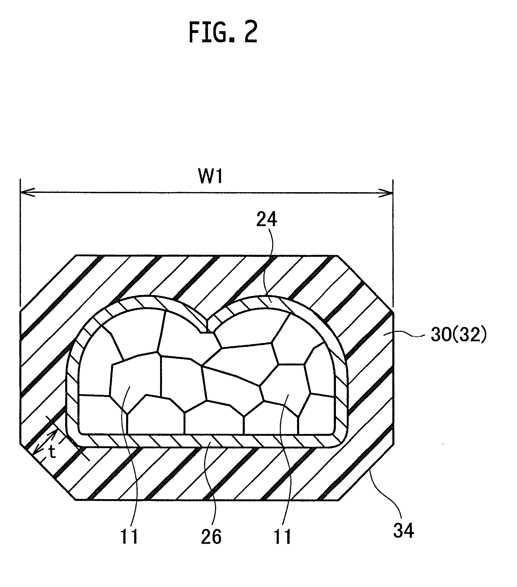

As illustrated in Fig. 2, the anticorrosion member 30 has a substantially rectangular cross-section. In the first embodiment, the first anticorrosion portion 31 has the same width as the second anticorrosion portion 32. However, the width of the second anticorrosion portion 32 may be larger than that of the first anticorrosion portion 31 so that the anticorrosion member 30 has enough thickness around the coating material swaging portion 25.

Preferably, the anticorrosion member 30 contains thermoplastic polyamide resin as the main component. By using as the main component, thermoplastic polyamide resin excellent in flexibility, the anticorrosion member 30 is less likely to crack even if the electric wire moves, and corrosion can be prevented over a long period of time. Moreover, the anticorrosion member 30, which is made of the aforementioned material, can come into close contact with the crimp terminal 20 and the wire coating material 12. This can prevent chloride ions and water, which are responsible for corrosion, from intruding through the contact interfaces between the anticorrosion member 30 and the crimp terminal 20 and between the anticorrosion member 30 and the wire coating material 12. It is therefore possible to effectively prevent corrosion at the connection between the wire connecting portion 22 and the conductor 11. In this specification, the main component is a component whose content is 50 % by weight or more of the entire anticorrosion member.

The thermoplastic polyamide resin constituting the anticorrosion member 30 can be obtained by reacting a dimer acid with a diamine compound, for example. Specifically, the thermoplastic polyamide resin can be selected from various types of thermoplastic substances which include amide bonds (-NH-C(=O)-) in the repeating structure of the polymer main chain and satisfy later described conditions for peel strength.

Specific examples of the thermoplastic polyamide resin used in the first embodiment are aliphatic polyamides including polyamide 6, polyamide 6,6, polyamide 4,6, polyamide 11, polyamide 12, polyamide 6,10, polyamide 6,12, polyamide 6/6,6, and polyamide 6/6,12 and mixtures thereof.

The method of manufacturing polyamide resin used in the first embodiment is not particularly limited and can be ring-opening polymerization of lactams, polycondensation of diamine and dicarboxylic acid, polycondensation of aminocarboxylic acid, or the like. As another manufacturing method, polyamide resin is obtained by polymerizing lactams, diamine, and/or dicarboxylic acid into oligomers of low molecular weight in a polymerization reactor and then using an extruder or the like to obtain higher molecular weight.

Examples of the lactams are ε-Caprolactam, enantlactam, and ω-Laurolactam.

The diamine is aliphatic amine, alicyclic amine, and aromatic amine, for example. Specific examples thereof are tetramethylenediamine, hexamethylenediamine, undecamethylenediamine, dodecamethylenediamine, tridecamethylenediamine, 1,9-nonamethylenediamine, 2-methyl,8-octamethylenediamine, 2,2,4-trimethylhexamethylenediamine, 2,4,4-trimethylhexamethylenediamine, 5-methylnonamethylenediamine, 1,3-bisaminomethylcyclohexane, 1,4-bisaminomethylcyclohexane, m-phenylenedimine, p-phenylenediamine, m-xylylenediamine, and p-xylylenediamine.

The dicarboxylic acid is aliphatic dicarboxylic acid, alicyclic dicarboxylic acid, and aromatic dicarboxylic acid, for example. Specific examples thereof are adipic acid, suberic acid, azelaic acid, sebacic acid, dodecanedioic acid, 1,1,3-tridecanedioic acid, 1,3-cyclohexanedicarboxylic acid, 1,4-cyclohexanedicarboxylic acid, terephthalic acid, isophthalic acid, naphthalenedicarboxylic acid, and dimer acid.

The anticorrosion member 30 may be composed of a single kind of thermoplastic polyamide resin or may be a mixture of two or more kinds of thermoplastic polyamide resins. Moreover, the anticorrosion member 30 may include additives, other polymers, and the like without impairing the physical properties. The aforementioned additives can be additives generally used in resin molding materials and are not particularly limited. To be specific, the additives can be inorganic fillers, antioxidants, metal deactivators, ultraviolet absorbers, fire retardants, processing aids (lubricant, wax, and the like), carbon, and other colorant pigments.

In order to prevent intrusion of chloride ions and water, which are substances responsible for corrosion, the peel strength between the anticorrosion member 30 and the terminal material of the crimp terminal 20 needs to be 0.1 N/mm or higher, and the peel strength between the anticorrosion member 30 and the wire coating material 12 needs to be 0.5 N/mm or higher. The peel strength in the specification refers to a value calculated by the measurement specified in JIS (Japanese Industrial Standards) K6854-3 (Adhesives - Determination of peel strength of bonded assemblies - Part 3 : Adhesives - 180°peel test for flexible-to-flexible bonded assemblies (T-peel test)). When the anticorrosion member 30 contains one of the aforementioned materials as the main component and the peel strengths between the anticorrosion member 30 and the terminal material of the crimp terminal 20 and between the anticorrosion member 30 and the wire coating material 12 are individually set to be the aforementioned values or higher, high sticking force can be obtained at the contact interfaces between the anticorrosion member 30 and the crimp terminal 20 and between the anticorrosion member 30 and the wire coating material 12. Accordingly, it is possible to surely obtain sufficient sealability at the contact interfaces and prevent intrusion of substances responsible for corrosion.

Preferably, the peel strength between the anticorrosion member 30 and the terminal material of the crimp terminal 20 is not higher than 0.74 N/mm. Even when the peel strength between the anticorrosion member 30 and the terminal material of the crimp terminal 20 is higher than 0.74 N/mm, high corrosion resistance can be obtained because the sticking force at the contact interface between the crimp terminal 20 and the anticorrosion member 30 is high. However, as the sticking force between the crimp terminal 20 and the anticorrosion member 30 increases, the sticking force between the anticorrosion member 30 and a mold for injection molding increases. Accordingly, the anticorrosion member 30 firmly adheres to the mold after injection molding and is difficult to release from the mold, reducing the productivity.

Accordingly, from the viewpoint of improving the mold release property while ensuring high sticking force at the contact interface between the crimp terminal 20 and the anticorrosion member 30, it is preferable that the peel strength between the anticorrosion member 30 and the terminal material of the crimp terminal 20 is not lower than 0.1 N/mm and not higher than 0.74 N/mm. From the viewpoint of further improving the mold release property, it is more preferable that the peel strength between the anticorrosion member 30 and the terminal material of the crimp terminal 20 is not higher than 0.5 N/mm.

The upper limit of the peel strength between the anticorrosion member 30 and the wire coating material 12 is not particularly limited. However, when the strength of the wire coating material 12 is lower than the peel strength between the anticorrosion member 30 and the wire coating material 12, damage on the wire coating material 12 could expose the conductor 11. It is therefore preferable that the peel strength between the anticorrosion member 30 and the wire coating material 12 is lower than the strength of the wire coating material 12.

In addition, the brittleness temperature of the anticorrosion member 30 needs to 0°C or lower in order to increase the durability of the anticorrosion member 30 in low-temperature environments. The brittleness temperature in the specification refers to a value calculated by a measurement method specified in JIS (Japanese Industrial Standards) K7216 (Testing Method for Brittleness Temperature of Plastics). When the brittleness temperature of an anticorrosion member is higher than 0°C, the anticorrosion member could crack. Substances responsible for corrosion intrude through the cracks, and the connection between the crimp terminal 20 and the conductor 11 is subject to corrosion. From the viewpoint of further reducing occurrence of cracks, it is preferable that the brittleness temperature of the anticorrosion member 30 is not higher than -20°C.

To obtain good moldability of the anticorrosion member 30, the melt flow rate of the anticorrosion member needs to be 26 g/10 min or higher. Herein, the melt flow rate in this specification refers to a value calculated by a measurement method specified in ASTM D1238 (Standard Test Method for Melt Flow Rates of Thermoplastics by Extrusion Plastometer). In terms of the conditions at measuring the melt flow rates, the measurement temperature is 230°C, and the load is 2.16 kg. When the melt flow rate of the anticorrosion member becomes lower than 26 g/10 min, the fluidity of melted resin is lowered in the process of injection molding of the anticorrosion member, causing molding failures. Accordingly, adequate anticorrosion performance cannot be ensured. From the viewpoint of improving the moldability of the anticorrosion member, it is preferable that the melt flow rate of the anticorrosion member is not lower than 50 g/10 min.

The conductor 11 of the electric wire 10 can be made of metal with high electric conductivity and can be made of copper, copper alloy, aluminum, aluminum alloy, or the like, for example. The surface of the conductor 11 may be tinned. In the light of the demand for weight reduction of wire harnesses in recent years, it is preferable that the conductor 11 is made of lightweight aluminum or aluminum alloy.

The wire coating material 12 covering the conductor 11 can be made of resin establishing electric isolation and can be made of olefin resin, for example. Specifically, the wire coating material 12 can contain as the main component, at least one of polyethylene (PE), polypropylene (PP), ethylene copolymer, and propylene copolymer. Moreover, the material of the wire coating material 12 can contain as the main component, polyvinyl chloride (PVC). Among the aforementioned materials, preferably, the wire coating material 12 is made of polypropylene or polyvinyl chloride. Polypropylene and polyvinyl chloride have high adhesion to the thermoplastic polyamide resin and can increase the sticking force at the contact interface between the wire coating material 12 and the anticorrosion member 30. Herein, the main component refers to a component whose content is 50 % by weight or more of the entire wire coating material.

The material (terminal material) of the crimp terminal 20 can be a metal with high electric conductivity. For example, the crimp terminal 20 can be made of at least one of copper, copper alloy, stainless steel, tin-plated copper, tin-plated copper alloy, and tin-plated stainless steel. The crimp terminal 20 can be also made of at least one of gold-plated copper, copper alloy, and stainless steel and also can be made of at least one of silver-plated copper, copper alloy, and stainless steel. Among the above-described metals, use of tin-plated copper, copper alloy, and stainless steel is preferred. Use of tin-plated copper, copper alloy, and stainless steel can increase the sticking force at the contact interface between the crimp terminal and the anticorrosion member 30 because the thermoplastic polyamide resin has high adhesion to tin.

As illustrated in Fig. 2, thickness t of the anticorrosion member 30 integrally molded around the connection between the conductor 11 and the crimp terminal 20 and around the wire coating material 12 adjacent to the connection is preferably at least not less than 0.01 mm. When sufficient sealability is ensured between the anticorrosion member 30 and the crimp terminal 20 and between the anticorrosion member 30 and the wire coating material 12, the thickness of the anticorrosion member 30 may be less than 0.01 mm. However, when the thickness t of the thinnest part of the anticorrosion member 30 is not less than 0.01 mm, the anticorrosion member 30 can have sufficient strength against the inner pressure of the same. This can make it possible to reduce intrusion of substances responsible for corrosion over a long period of time and prevent corrosion at the connection between the conductor 11 and the crimp terminal 20.

As described above, in the terminal-equipped electric wire of the first embodiment, the anticorrosion member is integrally molded around the connection between the conductor and the crimp terminal and around the wire coating material adjacent to the connection. The anticorrosion member includes thermoplastic polyamide resin as the main component. Moreover, the peel strength between the anticorrosion member and the terminal material of the crimp terminal is 0.1 to 0.74 N/mm, and the peel strength between the anticorrosion member and the wire coating material is not lower than 0.5 N/mm. Furthermore, the brittleness temperature of the anticorrosion member is not higher than 0°C, and the melt flow rate thereof is not lower than 26 g/10 min. Accordingly, it is possible to prevent substances responsible for corrosion from intruding through the contact interfaces between the anticorrosion member and the crimp terminal and between the anticorrosion member and the wire coating material, thus preventing corrosion at the connection of the conductor and the crimp terminal over a long period of time. Moreover, the materials and adhesion properties of the anticorrosion member are controlled to enhance the mold release property after injection molding. It is therefore possible to obtain higher productivity than before. Moreover, it is possible to reduce occurrence of cracks in the anticorrosion member while ensuring high moldability.

### <Method of Manufacturing terminal-equipped electric wire>

Next, a description is given of a method of manufacturing the terminal-equipped electric wire of the first embodiment. The terminal-equipped electric wire 1 is manufactured by first, inserting an end of the electric wire 10 into the wire connecting portion 22 of the crimp terminal 20 as illustrated in Figs. 3 and 4. The conductor 11 of the electric wire 10 is thus placed on the upper surface of the bottom plate 26 of the conductor crimp portion 24, and a part of the electric wire 10 covered with the wire coating material 12 is placed on the upper surface of the bottom plate 28 of the coating material swaging portion 25. Then, the pair of conductor swaging pieces 27 of the conductor crimp portion 24 are bent inward for swaging so that the conductor 11 comes into close contact with the upper surface of the bottom plate 26. Moreover, the pair of coating material swaging pieces 29 of the coating material swaging portion 25 are bent inward for swaging so that the wire coating material 12 comes into close contact with the upper surface of the bottom plate 28. In such a manner, the crimp terminal 20 and the electric wire 10 are connected to each other.

Next, the connection between the crimp terminal 20 and the electric wire 10 is placed in the mold. Thereafter, the inside of the mold is filled with resin of the anticorrosion member melted by heat. The mold is then cooled to solidify the melted resin of the anticorrosion member. The molded product is taken out, thus obtaining the terminal-equipped electric wire with the connection between the crimp terminal 20 and the electric wire 10 coated with the anticorrosion member 30. In other words, the anticorrosion member 30 can be formed by placing the connection between the crimp terminal 20 and the electric wire 10 and performing injection molding.

As described above, in the terminal-equipped electric wire of the first embodiment, the anticorrosion member is formed by injection molding. The shape and thickness of the anticorrosion member are thereby stabilized. Accordingly, the anticorrosion member can ensure sufficient strength even if having a small wall thickness. Moreover, because the anticorrosion member can be made thin, it is unnecessary to change the pitch size of a later-described connector. Accordingly, the terminal-equipped electric wire of the first embodiment can be inserted into a conventional size connector, and it is unnecessary to change the connector design for the terminal-equipped electric wire of the first embodiment.

### <Wire harness>

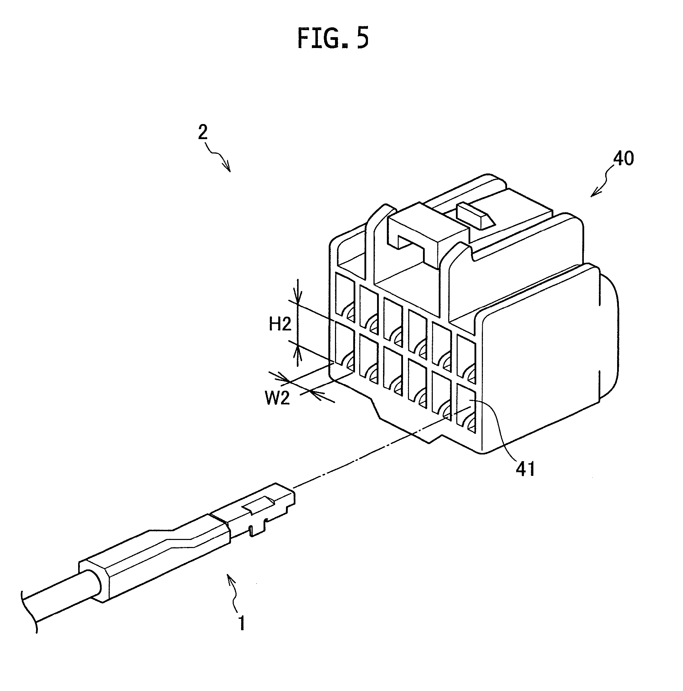

The wire harness of the first embodiment includes the aforementioned terminal-equipped electric wire. Specifically, the wire harness 2 of the first embodiment includes a connector 40 and the aforementioned terminal-equipped electric wire 1 as illustrated in Fig. 5.

In the front side of the connector 40, plural opposite terminal attachment portions (not shown) to which not-shown opposite terminals are attached are provided. In the back side of the connector 40, plural cavities 41 are provided. Each of the cavities 41 includes a substantially-rectangular opening so that the crimp terminal 20 and the anticorrosion member 30 of the terminal-equipped electric wire 1 are attached thereto. The opening of each cavity 41 is slightly larger than the cross section of the crimp terminal 20 and the anticorrosion member 30. The crimp terminal 20 is attached to the connector 40, and the electric wire 10 is pulled out from the back of the connector 40.

In the terminal-equipped electric wire of the first embodiment, the peel strength between the anticorrosion member and the terminal material of the crimp terminal is not lower than 0.1 N/mm, and the peel strength between the anticorrosion member and the wire coating material is not lower than 0.5 N/mm. It is therefore possible to prevent intrusion of substances responsible for corrosion through the contact interfaces between the anticorrosion member and the crimp terminal and between the anticorrosion member and the wire coating material. Accordingly, it is possible to prevent corrosion at the connection between the conductor and the crimp terminal over a long period of time even when the conductor of the electric wire is made of a different metallic material from that of the crimp terminal.

Moreover, the peel strength between the anticorrosion member and the terminal material of the crimp terminal is not higher than 0.74 N/mm. This can provide good mold release property of the anticorrosion member from the mold.

The anticorrosion member provided for the connection between the electric wire and the crimp terminal is required to ensure the anticorrosion performance while flexibly following changes of the electric wire led out of the connector. In the terminal-equipped electric wire of the first embodiment, the anticorrosion member contains as the main component, thermoplastic polyamide resin, which is excellent in flexibility. The anticorrosion member is therefore less likely to crack even when the electric wire moves, and corrosion of the electric wire is therefore prevented over a long period of time.

The anticorrosion member according to the first embodiment is characterized in that the melt flow rate thereof is not lower than 26 g per 10 min. When the resin constituting the anticorrosion member has low fluidity, the moldability of the anticorrosion member becomes low, and the anticorrosion member therefore needs to be increased in size. If the anticorrosion member is increased in size, the external size of the anticorrosion member significantly exceeds the size of the crimp terminal and the outer diameter of the electric wire. Accordingly, in the process of accommodating the crimp terminal in the connector, the anticorrosion member sometimes cannot be inserted into the cavity. The opening size of each cavity therefore needs to be increased, and existing connectors cannot be used. However, in the first embodiment, the anticorrosion member is made of resin with high fluidity, so that the anticorrosion member has high moldability and the external size of the anticorrosion member can be minimized. It is therefore possible to provide a terminal-equipped electric wire which can be inserted into an existing connector while ensuring high corrosion resistance.

Moreover, the anticorrosion member according to the first embodiment is characterized in that the brittleness temperature is not higher than 0°C. The terminal-equipped electric wire of the first embodiment is mainly used in vehicles and is therefore required to have high impact resistance. However, the anticorrosion member cannot have sufficient impact resistance if the anticorrosion member has a brittleness temperature higher than 0°C and is not thick. If the anticorrosion member is made thick, the opening size of each cavity of the connector needs to be large, and existing connectors cannot be used. However, the anticorrosion member of the first embodiment has a brittleness temperature of not higher than 0°C and therefore has high impact resistance even if the wall thickness thereof is small.

### EXAMPLE 1

Hereinafter, a description is given of the present invention in more detail using examples and comparative examples. However, the present invention is not limited to the examples.

### [Examples 1-1 and 1-2]

In Examples 1-1 and 1-2, as the resin of the anticorrosion member, materials shown in Table 1 are prepared. Moreover, electric wires are prepared in which the conductor is made of aluminum and the wire coating material is made of polyvinyl chloride (PVC). Crimp terminals in which the terminal material is tin-plated copper are prepared.

Next, the electric wires are connected to the respective crimp terminals, and then the connection between the crimp terminal and the electric wire is placed on a mold. Thereafter, the mold is filled with resin of the anticorrosion member of each example melted by heat and is then cooled for solidification of the melted resin. The molded product is then taken out, thus obtaining a terminal-equipped electric wire of each example. Table 1 shows the peel strength between the anticorrosion member used in each example and the terminal material (Sn) of the crimp terminal and the peel strength between the anticorrosion member and the wire coating material (PVC).

### [Comparative Examples 1-1 and 1-2]

In Comparative Examples 1-1 and 1-2, a terminal-equipped electric wire of each comparative example is obtained in a similar manner to Examples 1-1 and 1-2 excepting that the anticorrosion member is made of each material shown in Table 1.

### [Anticorrosion Performance Evaluation]

The anticorrosion performance of Examples 1-1 and 1-2 and Comparative Examples 1-1 and 1-2 is evaluated based on the measurement method specified in JIS (Japanese Industrial Standards) C60068-2-11 (Basic Environmental Testing Procedures Part 2 : Tests-Test Ka : Salt mist). To be specific, the salt mist test is performed for the connection between the conductor and the crimp terminal in the terminal-equipped electric wire of each example. To be more specific, the salt mist test is performed under the following conditions: the temperature is 35±2°C; the relative humidity (RH) is not lower than 85%; the saltwater concentration is 5±1%; and the test period is four days. Thereafter, it is visually determined whether the connection of each example is rusty. The evaluation results of the examples are shown together in Table 2, where examples in which rust is not observed at the connection are marked with "o" and examples in which rust is observed at the connection are marked with "x".

### [Crack Evaluation]

For the test pieces which are already subjected to the aforementioned anticorrosion performance evaluation, it is visually determined whether cracks have occurred in each test piece. The evaluation result of each example is shown in Table 2, where examples in which cracks are not observed are marked with "o" and examples in which cracks are observed are marked with "x".

### [Mold Release Property Evaluation]

As the mold, a mold for injection molding is prepared which includes an underlying coating and an amorphous fluorine resin coating having uniform thickness on the underlying coating. The mold is used in injection molding of the anticorrosion member and mold release tests thereof. To be specific, the mold release property is evaluated by the number of successes in releasing the terminal-equipped electric wire molded as described above and runners and sprues which are simultaneously formed with the terminal-equipped electric wire. The molding is performed for 100 times per each example, and the number of mold release property acceptable products in which the terminal-equipped electric wires, runners, and sprues are not damaged or deformed are shown in Table 2.

**[Table 1]**

| | ANTICORROSION MEMBER | | | PEEL STRENGTH FROM ANTICORROSION MEMBER (N/mm) | |
|---|---|---|---|---|---|
| | MATERIAL | MANUFACTURER | PRODUCT NAME | Sn | PVC |
| EXAMPLE 1-1 | Polyamide Thermoplastic Resin | Henkel Japan Ltd. | OM-653 | 0.33 | 2.05 |
| EXAMPLE 1-2 | Polyamide Thermoplastic Resin | Hitachi Kasei Polymer Co., Ltd. | XH005-6 | 0.21 | 2.39 |
| COMPARATIVE EXAMPLE 1-1 | Polyamide Thermoplastic Resin | - | Developed in-house | 1.15 | - |
| COMPARATIVE EXAMPLE 1-2 | Polyamide Thermoplastic Resin | - | Developed in-house | 0.75 | - |

**[Table 2]**

| | MELT FLOW RATE (g/10min.) | BRITTLENESS TEMPERATURE | ANTICORROSION PROPERTY | CRACK | MOLD RELEASE PROPERTY |
|---|---|---|---|---|---|
| EXAMPLE 1-1 | Unmeasurable because of high fluidity | Not higher than -40°C | ○ | ○ | 100/100 |
| EXAMPLE 1-2 | Unmeasurable because of high fluidity | Not higher than -25°C | ○ | ○ | 100/100 |
| COMPARATIVE EXAMPLE 1-1 | - | - | ○ | ○ | 46/100 |
| COMPARATIVE EXAMPLE 1-2 | Not lower than 69 | Not lower than 0°C | ○ | ○ | 75/100 |

As shown in Tables 1 and 2, rust and cracks are not observed in the terminal-equipped electric wires of Examples 1-1 and 1-2 according to the first embodiment after the anticorrosion evaluation test. It is therefore revealed that the terminal-equipped electric wires of Examples 1-1 and 1-2 have high sticking force between the crimp terminal and the anticorrosion member and between the wire coating material and the anticorrosion member and are excellent in anticorrosion performance. Moreover, in Examples 1-1 and 1-2, damage and deformation are not caused in the demolding process, showing good release property.

On the other hand, Comparative Examples 1-1 and 1-2 are excellent in anticorrosion performance but are poor in mold release property because of the excessively high peel strength thereof. To be specific, the peel strength of Comparative Example 1-1 is 1.15 N/mm. The adhesion force thereof to the mold is too strong, and more than half of the products are damaged in the demolding process. The peel strength of Comparative Example 1-2 is 0.75 N/mm, and some of the products thereof are damaged in the demolding process.

### [SECOND EMBODIMENT]

Next, a description is given of a terminal-equipped electric wire according to a second embodiment of the present invention in detail with reference to the drawings. The same components as those of the first embodiment are given the same reference numerals, and redundant description is omitted.

In a similar manner to the first embodiment, a terminal-equipped electric wire 1 of the second embodiment includes: an electric wire 10 including a conductor 11 and a wire coating material 12 covering the conductor 11; and a crimp terminal 20 connected to the conductor 11 of the electric wire 10. The terminal-equipped electric wire 1 further includes an anticorrosion member 30 integrally molded around the connection between the conductor 11 and the crimp terminal 20 and around a part of the wire coating material 12 adjacent to the connection.

The crimp terminal 20 of the terminal-equipped electric wire 1 is female type similarly to the first embodiment. The crimp terminal 20 includes an electric connection portion 21 in the front side and a wire connecting portion 22 in the back side.

In a similar manner to the first embodiment, a bridge portion 23, the wire connecting portion 22, and the portions of the conductor 11 and the wire coating material 12 which are covered with the wire connecting portion 22 are coated with the anticorrosion member 30. In this manner, the circumference of the portions of the conductor 11 and the wire coating material 12 covered with the wire connecting portion 22 are completely coated with the anticorrosion member 30, thus ensuring the anticorrosion performance at the contact portion between the conductor 11 and the wire connecting portion 22. The anticorrosion member 30 is formed so as to have a substantially-rectangular cross section similarly to the first embodiment and have such a size that the anticorrosion member 30 can be attached to the terminal housing of a connector together with the electric connection portion 21.

The anticorrosion member 30 contains thermoplastic polyamide resin as the main component similarly to the first embodiment. The anticorrosion member 30 may contain additives, other polymers, and the like without impairing the physical properties. The additives can be inorganic fillers, antioxidants, metal deactivators, ultraviolet absorbers, fire retardants, processing aids (lubricant, wax, and the like), carbon, and other colorant pigments as described above.

In the second embodiment, in order to prevent intrusion of chloride ions and water, which are substances responsible for corrosion, it is preferable that the peel strength between the anticorrosion member 30 and the terminal material of the crimp terminal 20 is not lower than 0.15 N/mm and the peel strength between the anticorrosion member 30 and the wire coating material 12 is not lower than 0.5 N/mm. The peel strength in herein refers to a value calculated by the measurement specified by JIS K6854-3 similarly to the first embodiment. When the anticorrosion member 30 contains the aforementioned materials as the main component and the peel strengths between the anticorrosion member 30 and the terminal material of the crimp terminal 20 and between the anticorrosion member 30 and the wire coating material 12 are individually set to the aforementioned values or higher, high sticking force can be obtained at the contact interfaces between the anticorrosion member 30 and the crimp terminal 20 and between the anticorrosion member 30 and the wire coating material 12. Accordingly, it is possible to ensure sufficient sealability at the contact interfaces and prevent intrusion of substances responsible for corrosion.

From the viewpoint of further enhancing the sealability between the anticorrosion member 30 and the crimp terminal 20, it is more preferable that the peel strength between the anticorrosion member 30 and the terminal material of the crimp terminal 20 is not lower than 0.2 N/mm. From the same viewpoint, it is preferable that the peel strength between the anticorrosion member 30 and the wire coating material 12 is not lower than 2.0 N/mm.

Preferably, the upper limit of the peel strength between the anticorrosion member 30 and the terminal material of the crimp terminal 20 is not higher than 0.74 N/mm similarly to the first embodiment.

Moreover, in order to increase the durability and anticorrosion performance of the anticorrosion member 30, the brittleness temperature of the anticorrosion member 30 needs to 0°C or lower similarly to the first embodiment. When the brittleness temperature of an anticorrosion member is higher than 0°C, substances responsible for corrosion is more likely to intrude through cracks generated in the anticorrosion member, and the connection between the crimp terminal 20 and the conductor 11 is therefore subject to corrosion.

In order to obtain good moldability of the anticorrosion member 30, the melt flow rate of the anticorrosion member needs to be 26 g/10 min or higher similarly to the first embodiment. When the melt flow rate of the anticorrosion member is lower than 26 g/10 min, the melted resin has low fluidity at injection molding of the anticorrosion member. This can result in a molding failure, and sufficient anticorrosion performance cannot be ensured.

The material of the conductor 11 of the electric wire 10, the material of the wire coating material 12 covering the conductor 11, and the material of the crimp terminal 20 can be the same as those of the first embodiment. Thickness t of the anticorrosion member 30 integrally molded around the connection between the conductor 11 and the crimp terminal 20 and around a part of the wire coating material 12 adjacent to the connection is preferably at least not less than 0.01 mm.

As described above, in the terminal-equipped electric wire of the second embodiment, the anticorrosion member is integrally molded around the connection between the conductor and the crimp terminal and around the wire coating material adjacent to the connection. The anticorrosion member contains thermoplastic polyamide resin as the main component. Moreover, the peel strength between the anticorrosion member and the terminal material of the crimp terminal is not lower than 0.15 N/mm, and the peel strength between the anticorrosion member and the wire coating material is not lower than 0.5 N/mm. Furthermore, the brittleness temperature of the anticorrosion member is not higher than 0°C, and the melt flow rate thereof is not lower than 26 g/10 min. Accordingly, it is possible to prevent substances responsible for corrosion from intruding through the contact interfaces between the anticorrosion member and the crimp terminal and between the anticorrosion member and the wire coating material, thus preventing corrosion at the connection between the conductor and the crimp terminal over a long period of time. Moreover, it is possible to reduce occurrence of cracks in the anticorrosion member and prevent molding failures, ensuring sufficient anticorrosion property.

### EXAMPLE 2

Hereinafter, a description is given of the present invention in more detail using examples and comparative examples. However, the present invention is not limited to the examples.

### [Examples 2-1 and 2-2]

In Examples 2-1 and 2-2, as the resin of the anticorrosion member, materials shown in Table 3 are prepared. Moreover, electric wires are prepared in which the conductor is made of aluminum and the wire coating material is made of polyvinyl chloride (PVC). Crimp terminals in which the terminal material is tin-plated copper are prepared.

Next, the electric wires are connected to the respective crimp terminals, and then the connection between the crimp terminal 20 and the electric wire 10 is placed on a mold. The mold is then filled with a material of the anticorrosion member of each example melted by heat and is then cooled for solidification of the material of the anticorrosion member. The molded product is then taken out, thus obtaining a terminal-equipped electric wire of each example. Table 3 shows the peel strength between the anticorrosion member used in each example and the terminal material (Sn) of the crimp terminal and the peel strength between the anticorrosion member and the wire coating material (PVC).

### [Comparative Examples 2-1 to 2-3]

In Comparative Examples 2-1 to 2-3, terminal-equipped electric wires of the comparative examples are obtained in a similar manner to Examples 2-1 and 2-2 excepting that the anticorrosion member is made of each material shown in Table 3.

### [Anticorrosion Performance Evaluation]

The anticorrosion performance of Examples 2-1 and 2-2 and Comparative Examples 2-1 to 2-3 is evaluated based on the measurement method specified in JIS C60068-2-11 similarly to the first embodiment. The evaluation results for the examples are shown in Table 4, where examples in which rust is not observed at the connection are marked with "o" and examples in which rust is observed at the connection are marked with "x".

### [Crack Evaluation]

For the test pieces which are already subjected to the aforementioned anticorrosion performance evaluation, it is visually determined whether cracks have occurred in each test piece. The evaluation result for the examples are shown in Table 4, where examples in which cracks are not observed are marked with "○" and examples in which cracks are observed are marked with "x".

**[Table 3]**

| | ANTICORROSION MEMBER | | | PEEL STRENGTH FROM ANTICORROSION MEMBER (N/mm) | |
|---|---|---|---|---|---|
| | MATERIAL | MANUFACTURER | PRODUCT NAME | Sn | PVC or PP |
| EXAMPLE 2-1 | Polyamide Thermoplastic Resin | Henkel Japan Ltd. | OM-653 | 0.33 | 2.05 (PVC) |
| EXAMPLE 2-2 | Polyamide Thermoplastic Resin | Hitachi Kasei Polymer Co., Ltd. | XH005-6 | 0.21 | 2.39 (PVC) |
| COMPARATIVE EXAMPLE 2-1 | Olefin Thermoplastic Resin | Mitsui Chemicals, Inc. | ADMER QE060 | - | - |
| COMPARATIVE EXAMPLE 2-2 | Polyamide Thermoplastic Resin | Hitachi Kasei Polymer Co., Ltd. | ZH750-1 | 0.15 | 0.50 (PVC) |
| COMPARATIVE EXAMPLE 2-3 | Olefin Thermoplastic Resin | Mitsui Chemicals, Inc. | ADMER QE090 | 0.43 | 2.18 (PP) |

**[Table 4]**

| | MELT FLOW RATE (g/10min.) | BRITTLENESS TEMPERATURE | ANTICORROSION PROPERTY | CRACK |
|---|---|---|---|---|
| EXAMPLE 2-1 | Unmeasurable because of high fluidity | Not higher than -40°C | ○ | ○ |
| EXAMPLE 2-2 | Unmeasurable because of high fluidity | Not higher than -25°C | ○ | ○ |
| COMPARATIVE EXAMPLE 2-1 | 7 | - | × | × |
| COMPARATIVE EXAMPLE 2-2 | Unmeasurable (not lower than 69) | More than 0°C | ○ | × |
| COMPARATIVE EXAMPLE 2-3 | 26 | Not higher than -25°C | × | ○ |

As shown in Table 4, rust and cracks are not observed in the terminal-equipped electric wires of Examples 2-1 and 2-2 according to the second embodiment after the anticorrosion evaluation test. It is therefore revealed that the terminal-equipped electric wires of Examples 2-1 and 2-2 have high sticking force between the crimp terminal and the anticorrosion member and between the wire coating material and the anticorrosion member and are excellent in anticorrosion performance.

On the other hand, rust and cracks are observed in Comparative Example 2-1 after the anticorrosion evaluation test. In Comparative Example 2-2, cracks are observed after the anticorrosion evaluation test while rust is not observed. In Comparative Example 2-3, cracks are not observed after the anticorrosion evaluation test while rust is observed.

The terminal-equipped electric wire of Comparative Example 2-1 contains olefin thermoplastic resin as the main component. The melt flow rate thereof is lower than 26 g/10 min and is not enough to ensure desired moldability. Accordingly, rust and cracks are observed after the anticorrosion evaluation test. As for the terminal-equipped electric wire of Comparative Example 2-2, the peel strength between the anticorrosion member and the terminal material of the crimp terminal and the peel strength between the anticorrosion member and the wire coating material satisfy the desired values. However, the terminal-equipped electric wire of Comparative Example 2-2 does not have sufficient durability since the brittleness temperature thereof is higher than 0°C. Accordingly, cracks are observed after the anticorrosion evaluation test although rust is not observed. The terminal-equipped electric wire of Comparative Example 2-3 contains polyolefin resin as the main component instead of polyamide resin and therefore has poor anticorrosion property. Accordingly, rust is observed after the anticorrosion evaluation test although cracks are not observed.

### [THIRD EMBODIMENT]

Next, a description is given of a terminal-equipped electric wire and a wire harness according to a third embodiment of the present invention in detail with reference to the drawings. The same components as those of the first and second embodiments are given the same reference numerals, and redundant description is omitted.

### <Terminal-equipped electric wire>

In a similar manner to the first embodiment, a terminal-equipped electric wire 1 of the third embodiment includes: an electric wire 10 including a conductor 11 and a wire coating material 12 covering the conductor 11; and a crimp terminal 20 connected to the conductor 11 of the electric wire 10. The terminal-equipped electric wire 1 further includes an anticorrosion member 30 integrally molded around the connection between the conductor 11 and the crimp terminal 20 and around a part of the wire coating material 12 adjacent to the connection.

The crimp terminal 20 of the terminal-equipped electric wire 1 is female type similarly to the first embodiment. The crimp terminal 20 includes an electric connection portion 21 in the front side and a wire connecting portion 22 in the back side.

In a similar manner to the first embodiment, a bridge portion 23, the wire connecting portion 22, and the portions of the conductor 11 and the wire coating material 12 which are covered with the wire connecting portion 22 are coated with the anticorrosion member 30. In this manner, the circumferences of the portions of the conductor 11 and the wire coating material 12 covered with the wire connecting portion 22 are completely coated with the anticorrosion member 30, thus ensuring the anticorrosion performance at the contact portion between the conductor 11 and the wire connecting portion 22. The anticorrosion member 30 is formed so as to have a substantially-rectangular cross section similarly to the first embodiment and have such a size that the anticorrosion member 30 can be attached to the terminal housing of the connector together with the electric connection portion 21.

The anticorrosion member 30 contains thermoplastic polyamide resin as the main component similarly to the first embodiment. The anticorrosion member 30 may include additives, other polymers, and the like without impairing the physical properties. The additives can be inorganic fillers, antioxidants, metal deactivators, ultraviolet absorbers, fire retardants, processing aids (lubricant, wax, and the like), carbon, and other colorant pigments as described above.

In order to prevent intrusion of chloride ions and water, which are substances responsible for corrosion, the peel strength between the anticorrosion member 30 and the terminal material of the crimp terminal 20 is set to 0.1 N/mm or higher and the peel strength between the anticorrosion member 30 and the wire coating material 12 is set to 0.5 N/mm or higher. When the anticorrosion member 30 contains one of the aforementioned materials as the main component and the peel strengths between the anticorrosion member 30 and the terminal material of the crimp terminal 20 and between the anticorrosion member 30 and the wire coating material 12 are individually set to the aforementioned values or higher, high sticking force can be obtained at the contact interfaces between the anticorrosion member 30 and the crimp terminal 20 and between the anticorrosion member 30 and the wire coating material 12. Accordingly, it is possible to ensure sufficient sealability at the contact interfaces and prevent intrusion of substances responsible for corrosion.

Preferably, the upper limit of the peel strength between the anticorrosion member 30 and the terminal material of the crimp terminal 20 is not higher than 0.74 N/mm similarly to the first embodiment.

Moreover, in order to increase the durability and anticorrosion performance of the anticorrosion member 30, the brittleness temperature of the anticorrosion member 30 needs to be 0°C or lower similarly to the first embodiment. In order to obtain good moldability of the anticorrosion member 30, similarly to the first embodiment, the melt flow rate of the anticorrosion member needs to be 26 g/10 min or higher.

The material of the conductor 11 of the electric wire 10, the material of the wire coating material 12 covering the conductor 11, and the material of the crimp terminal 20 can be the same as those of the first embodiment. Thickness t of the anticorrosion member 30 integrally molded around the connection between the conductor 11 and the crimp terminal 20 and around the wire coating material 12 adjacent to the connection is preferably at least not less than 0.01 mm.

As described above, in the terminal-equipped electric wire of the third embodiment, the anticorrosion member is integrally molded around the connection between the conductor and the crimp terminal and around the wire coating material adjacent to the connection. The anticorrosion member contains thermoplastic polyamide resin as the main component. Moreover, the peel strength between the anticorrosion member and the terminal material of the crimp terminal is not lower than 0.1 N/mm or higher, and the peel strength between the anticorrosion member and the wire coating material is not lower than 0. 5 N/mm. Furthermore, the brittleness temperature of the anticorrosion member is not higher than 0°C, and the melt flow rate thereof is not lower than 26g/10 min. Accordingly, it is possible to prevent substances responsible for corrosion from intruding through the contact interfaces between the anticorrosion member and the crimp terminal and between the anticorrosion member and the wire coating material, thus preventing corrosion at the connection between the conductor and the crimp terminal over a long period of time. Moreover, it is possible to reduce occurrence of cracks in the anticorrosion member while ensuring high moldability.

### <Wire harness>

A wire harness of the third embodiment includes the aforementioned terminal-equipped electric wire. Specifically, a wire harness 2 of the third embodiment includes a connector 40 and the aforementioned terminal-equipped electric wire 1 as illustrated in Fig. 5.

In the front side of the connector 40, plural opposite terminal attachment portions (not shown) to which not-shown opposite terminals are attached are provided. In the back side of the connector 40, plural cavities 41 are provided. Each of the cavities 41 includes a substantially-rectangular opening so that the crimp terminal 20 and the anticorrosion member 30 in the terminal-equipped electric wire 1 are attached thereto. The crimp terminal 20 is attached to the connector 40, and the electric wire 10 is pulled out from the back of the connector 40.

In the third embodiment, it is preferable that width W1 of the anticorrosion member of the terminal-equipped electric wire 1 is smaller than opening width W2 of each cavity 41 of the connector 40 to which the crimp terminal 20 and the anticorrosion member 30 are inserted. As described above, the terminal-equipped electric wire 1 of the third embodiment includes the anticorrosion member 30 at the connection between the electric wire 10 and the crimp terminal 20, thus ensuring high anticorrosion performance. When the thickness of the anticorrosion member 30 is at least not less than 0.01 mm, it is possible to reduce intrusion of substances responsible for corrosion over a long period of time and prevent corrosion at the connection between the conductor 11 and the crimp terminal 20. The anticorrosion member 30 of the third embodiment can be made thin as described above. Accordingly, it is unnecessary to change the pitch size of the connector 40. Accordingly, the terminal-equipped electric wire of the third embodiment can be inserted into conventional-size connectors. It is therefore unnecessary to change the connector design for the terminal-equipped electric wire of the third embodiment, thus making it possible to use conventional connectors.

In the third embodiment, it is preferable that the width W1 of the anticorrosion member 30 and the opening width W2 of the cavity 41 satisfy the relation: W1 ≤ W2 - 0.05 mm. In other words, it is preferable that the width W1 of the anticorrosion member 30 is 0.05 mm smaller than the opening width W2 of the cavity 41. When the width (W1) of the anticorrosion member 30 satisfies the above relation, the crimp terminal 20 and the anticorrosion member 30 inserted into the cavity 41 are surely fixed and are prevented from vibrating within the cavity 41.

To be specific, when the width of the tip portion of the crimp terminal 20 is 2.30 mm and the opening width W2 of the cavity 41 is 3.85 mm, the width W1 of the anticorrosion member 30 is preferably set to 3.80 mm or less. When the width of the tip portion of the crimp terminal 20 is 0.64 mm and the opening width W2 of the cavity 41 is 2.10 mm, the width W1 of the anticorrosion member 30 is preferably set to 2.05 mm or less. Moreover, when the width of the tip portion of the crimp terminal 20 is 1.50 mm and the opening width W2 of the cavity 41 is 3.55 mm, the width W1 of the anticorrosion member 30 is preferably set to 3.50 mm or less.

Moreover, from the viewpoint of using conventional connectors, it is preferable that maximum height H1 of the anticorrosion member 30 in the terminal-equipped electric wire 1 is smaller than opening height H2 of the cavity 41 of the connector 40 into which the crimp terminal 20 and the anticorrosion member 30 are inserted. In a similar manner to the above description, from the viewpoint of reducing vibration of the crimp terminal 20 and the anticorrosion member 30 within the cavity 41, it is preferable that the height H1 of the anticorrosion member 30 and the opening height H2 of the cavity 41 satisfy the relation of H1 ≤ H2 - 0.05 mm.

### EXAMPLE 3

Hereinafter, a description is given of the present invention in more detail using examples and comparative examples. However, the present invention is not limited to the examples.

### [Examples 3-1 and 3-2]

In Examples 3-1 and 3-2, as the resin of the anticorrosion member, materials shown in Table 5 are prepared. Moreover, electric wires are prepared in which the conductor is made of aluminum and the wire coating material is made of polyvinyl chloride (PVC). Crimp terminals in which the terminal material is tin-plated copper are prepared.

Next, the electric wires are connected to the crimp terminals, and then the connection between the crimp terminal and the electric wire is placed on a mold. Thereafter, the mold is filled with resin of the anticorrosion member of each example melted by heat and is then cooled for solidification of the melted resin. The molded product is then taken out, thus obtaining a terminal-equipped electric wire of each example. The width of the anticorrosion member of the terminal-equipped electric wire of each example is set to 3.80 mm. Table 5 shows the peel strength between the anticorrosion member used in each example and the terminal material (Sn) of the crimp terminal and the peel strength between the anticorrosion member and the wire coating material (PVC or PP).

### [Comparative Example 3-1]

In Comparative Example3-1, a terminal-equipped electric wire is obtained in a similar manner to Examples 3-1 and 3-2 excepting that materials shown in Table 5 are used as the material of the anticorrosion member.

### [Anticorrosion Performance Evaluation]

The anticorrosion performance of Examples 3-1 and 3-2 and Comparative Examples 3-1 is evaluated based on the measurement method specified in JIS C60068-2-11. The evaluation results for the examples are shown in Table 6, where examples in which rust is not observed at the connection are marked with "o" and examples in which rust is observed at the connection are marked with "x".

### [Crack Evaluation]

For the test pieces which are already subjected to the aforementioned anticorrosion performance evaluation, it is visually determined whether cracks have occurred in each test piece. The evaluation result for the examples are shown in Table 6, where examples in which cracks are not observed are marked with "o" and examples in which cracks are observed are marked with "x".

**[Table 5]**

| | ANTICORROSION MEMBER | | | PEEL STRENGTH FROM ANTICORROSION MEMBER (N/mm) | |
|---|---|---|---|---|---|
| | MATERIAL | MANUFACTURER | PRODUCT NAME | Sn | PVC or PP |
| EXAMPLE 3-1 | Polyamide thermoplastic resin | Henkel Japan Ltd. | OM-653 | 0.33 | 2.05 (PVC) |
| EXAMPLE 3-2 | Polyamide thermoplastic resin | Hitachi Kasei Polymer Co., Ltd. | XH005-6 | 0.21 | 2.39 (PVC) |
| COMPARATIVE EXAMPLE 3-1 | Olefin thermoplastic resin | Mitsui Chemicals, Inc. | ADMER QE090 | 0.43 | 2.18 (PP) |

**[Table 6]**

| | MELT FLOW RATE (g/10min.) | BRITTLENESS TEMPERATURE | ANTICORROSION PROPERTY | CRACK | USE OF CONVENTIONAL CONNECTOR |
|---|---|---|---|---|---|
| EXAMPLE 3-1 | Unmeasurable because of high fluidity | Not higher than -40°C | ○ | ○ | ○ |
| EXAMPLE 3-2 | Unmeasurable because of high fluidity | Not higher than -25°C | ○ | ○ | ○ |
| COMPARATIVE EXAMPLE 3-1 | 26 | Not higher than -25°C | × | ○ | ○ |

As shown in Tables 5 and 6, rust and cracks are not observed in the terminal-equipped electric wires of Examples 3-1 and 3-2 according to the third embodiment after the anticorrosion evaluation test. It is therefore revealed that the terminal-equipped electric wires of Examples 3-1 and 3-2 have high adhesion force between the crimp terminal and the anticorrosion member and between the wire coating material and the anticorrosion member and are excellent in anticorrosion performance.

On the other hand, in Comparative Example 3-1, rust is observed after the anticorrosion evaluation test although cracks are not observed. In Comparative Example 3-1, for the terminal-equipped electric wire is composed of olefin thermoplastic resin, adherence of saltwater to the connecting portion is not sufficiently prevented, thus resulting in poor corrosion resistance.

Moreover, since the width of Examples 3-1 and 3-2 is set to 3.80 mm, the terminal-equipped electric wires of Examples 3-1 and 3-2 can be inserted into conventional connectors provided with cavities having an opening width of 3.85 mm.

The entire contents of Japanese Patent Application Nos. 2012-165218, 2012-165221, and 2012-165238 (filed on July 25, 2012) are incorporated herein by reference.

Hereinabove, the contents of the present invention are described with the examples. However, it is obvious to those skilled in the art that the present invention is not limited to those descriptions and can be variously modified and improved.

### Industrial Applicability

In the terminal-equipped electric wire of the present invention, it is possible to prevent substances responsible for corrosion from intruding through the contact interfaces between the anticorrosion member and the crimp terminal and between the anticorrosion member and the wire coating material. Accordingly, it is possible to prevent corrosion at the connection between the conductor and the crimp terminal over a long period of time even when the conductor of the electric wire and the crimp terminal are made of different metallic materials. Moreover, it is possible to improve the release property of the anticorrosion member from the mold, thus increasing the productivity.

In the terminal-equipped electric wire of the present invention, the anticorrosion member is formed by injection molding, so that the shape and thickness of the anticorrosion member can be stabilized. As a result, the anticorrosion member has sufficient strength and ensures corrosion resistance even if the wall thickness of the anticorrosion member is small. Moreover, the terminal-equipped electric wire of the present invention can be inserted into conventional-size connectors, and it is unnecessary to change the design of connectors.

### REFERENCE SIGHS LIST

- 1: TERMINAL-EQUIPPED ELECTRIC WIRE
- 2: WIRE HARNESS
- 10: ELECTRIC WIRE
- 11: CONDUCTOR
- 12: WIRE COATING MATERIAL
- 20: CRIMP TERMINAL
- 30: ANTICORROSION MEMBER
- 40: CONNECTOR
- 41: CAVITY

## Claims

1. A terminal-equipped electric wire, comprising:
an electric wire including a conductor and a wire coating material covering the conductor;
a crimp terminal connected to the conductor of the electric wire; and
an anticorrosion member which is integrally formed around a connection between the conductor and the crimp terminal and around the wire coating material adjacent to the connection,
wherein the anticorrosion member contains thermoplastic polyamide resin as a main component,
peel strength between the anticorrosion member and a terminal material of the crimp terminal is not lower than 0.1 N/mm and not higher than 0.74 N/m,
peel strength between the anticorrosion member and the wire coating material is not lower than 0.5 N/mm,
the anticorrosion member has a brittleness temperature of not higher than 0°C, and
the anticorrosion member has a melt flow rate of not lower than 26 g/10 min.

2. A terminal-equipped electric wire according to claim 1, wherein the peel strength between the anticorrosion member and the terminal material of the crimp terminal is not lower than 0.15 N/mm and not higher than 0.74 N/m.

3. A terminal-equipped electric wire according to claim 1 or 2, wherein the anticorrosion member has a width smaller than opening width of a cavity of a connector to which the crimp terminal and the anticorrosion member are inserted.

4. A terminal-equipped electric wire according to claim 3, wherein the width (W1) of the anticorrosion member and the opening width (W2) of the cavity satisfy a relation of W1 ≤ W2-0.05 mm.

5. A terminal-equipped electric wire according to any one of claims 1 to 4, wherein the conductor is made of aluminum or aluminum alloy,
the terminal material of the crimp terminal is made of at least one selected from the group consisting of copper, copper alloy, stainless steel, tin-plated copper, tin-plated copper alloy, tin-plated stainless steel, gold-plated copper, gold-plated copper alloy, gold-plated stainless steel, silver-plated copper, silver-plated copper alloy, and silver-plated stainless steel, and
the wire coating material is made of at least one selected from the group consisting of polyethylene, polypropylene, ethylene copolymer, propylene copolymer, and polyvinyl chloride.

6. A wire harness, comprising a terminal-equipped electric wire according to any one of claims 1 to 5.

7. A wire harness, comprising:
a terminal-equipped electric wire according to claim 1 or 2; and
a connector including a plurality of cavities into which the crimp terminal and the anticorrosion member of the terminal-equipped electric wire are inserted,
wherein the anticorrosion member has a width smaller than opening width of each cavity of the connector.

8. A method of manufacturing a terminal-equipped electric wire, comprising:
connecting an electric wire including a conductor and a wire coating material covering the conductor with a crimp terminal connected to the conductor of the electric wire; and
forming an anticorrosion member by injection molding around a connection between the conductor and the crimp terminal and around the wire coating material adjacent to the connection,
wherein the anticorrosion member contains thermoplastic polyamide resin as a main component,
peel strength between the anticorrosion member and a terminal material of the crimp terminal is not lower than 0.1 N/mm and not higher than 0.74 N/m,
peel strength between the anticorrosion member and the wire coating material is not lower than 0.5 N/mm,
the anticorrosion member has a brittleness temperature of not higher than 0°C, and
the anticorrosion member has a melt flow rate of not lower than 26 g/10 min.

9. A method of manufacturing a terminal-equipped electric wire according to claim 8, wherein the peel strength between the anticorrosion member and the terminal material of the crimp terminal is not lower than 0.15 N/mm and not higher than 0.74 N/m.
